# EUROPÄISCHE PATENTSCHRIFT

(11) **EP 1 124 108 B1**
(45) Veröffentlichungstag und Bekanntmachung des Hinweises auf die Patenterteilung: **29.10.2003**
(21) Anmeldenummer: 01101435.4
(22) Anmeldetag: 23.01.2001
(51) Int. Cl.: G01B 1/00, C04B 35/83

(54) **Kalibrierkörper**
Calibration body
Etalon

(30) Priorität: 25.01.2000 DE 10003176
(43) Veröffentlichungstag der Anmeldung: 16.08.2001
(73) Patentinhaber: Deutsches Zentrum für Luft- und Raumfahrt e.V, 53127 Bonn (DE)
(72) Erfinder: Krenkel, Walter, 71272 Renningen (DE); Renz, Ralph, 71069 Sindelfingen (DE); Benitsch, Bodo, 70585 Stuttgart-Rohr (DE)
(74) Vertreter: Grimm, Ekkehard, Dipl.-Phys.

(56) Entgegenhaltungen:
- EP-A- 0 336 648
- DE-A- 4 409 377
- DE-C- 19 642 506

## Beschreibung

Die vorliegende Erfindung betrifft einen Kalibrierkörper, der wenigstens teilweise aus einem Kohlenstofffaser-Verbundkörper besteht.

Die DE 19 642 506 C1, die den nächstkommenden Stand der Technik darstellt, beschreibt die Herstellung eines Gegenstands auf der Basis von Kohlenfaserstoffen, Karbiden und/oder Di-Karbiden mit hoher Oberflächenfestigkeit und großer Temperaturbeständigkeit. Es wird ein Rohling auf Basis von Kohlenstoff in Form von Graphit oder Kohlenstofffasern mit einer Masse von Silizium, Bor, Kupfer und einem oder mehreren schwerschmelzbaren Metallen infiltriert oder getränkt. Es erfolgt eine Reaktion unter Sauerstoffausschluß zur Bildung von zunächst Siliziumkarbid und danach Borkarbid. Unter Sauerstoffausschluß wird eine Massezunahme des getränkten Rohlings auf 15-150% bei einer Temperatur von 2190 bis 2220 K und einem Druck von 60 bis 400 Pa erreicht. Es erfolgt eine Zwischenkühlung; dann wird auf die Oberfläche des Rohlings eine Paste aus Hafnium, Bor, Kohlenstoff und organischen Bindemitteln aufgetragen, der Rohling völlig getrocknet mit einer dann folgenden Wärmebehandlung in Silizium und Stickstoffatmosphäre. Aus so hergestellten Rohlingen können unter anderem Endmaße und Lehrdorne hergestellt werden.

Kalibrierkörper werden in weiten Bereichen der Industrie und Forschung eingesetzt, um Strukturen und Bauteile räumlich zu vermessen oder um Meßeinrichtung und Gerät zu justieren und zu kalibrieren. Derartige Meßeinrichtungen müssen nach der Erstaufstellung, nach Reparaturen und routinemäßig nach bestimmten Zeitintervallen neu kalibriert werden.

Die Kalibrierstrecke richtet sich nach der Größe der zu vermessenden Anlage und kann bis zu über 1000 mm betragen. Weiterhin müssen Kalibrierkörper in den überwiegenden Anwendungsfällen in drei Raumrichtungen formstabil sein.

Kalibrierkörper werden als zweidimensionale Bauteile (z. B. Platten) oder als dreidimensionale Körper (z. B. Würfel, Tetraeder) aufgebaut. Ein derartiger dreidimensionaler Prüfkörper ist aus der DE-A1 197 20 883 bekannt. Dieser Prüfkörper dient zur Überwachung von räumlich positionierenden bzw. messenden Systemen, speziell von Koordinatenmeßgeräten. Es wird eine spezielle Tetraederkonstruktion aus Kugeln und Stäben beschrieben, wobei die Stäbe aus Kohlenstofffaser-Verbundwerkstoff mit unidirektionalen Fasern in Stab-Längsrichtung aufgebaut sind. Die jeweiligen Stäbe sind miteinander an Knotenpunkten verbunden, an denen die Kugeln sitzen. Mit einem solchen Gerät sollen große und ortsfeste Objekte gemessen werden; der Aufbau aus Stäben und Kugeln soll eine einfache Montage und Demontage und somit einen einfachen Transport ermöglichen. Die Verwendung, in einer Ausführungsform dieses Prüfkörpers, von Stäben aus CFK mit longitudinaler Faserausrichtung soll zu einem geringen Gewicht des Prüfkörpers, einer hohen Langzeitstabilität und einem gegen Null gehenden thermischen Ausdehnungskoeffizienten beitragen. Durch den demontierbaren Aufbau ergeben sich allerdings hinsichtlich der Maßhaltigkeit und deren Reproduzierbarkeit erhebliche Unzulänglichkeiten.

Es hat sich gezeigt, daß Kalibrierkörper, die Baukomponenten aus CFK (kohlenstofffaserverstärkte Kunststoffe) umfassen, die nachteiligen Eigenschaften der Wasseranlagerung, des Kriechens (unter Kriechen versteht man eine belastungsabhängige - auch Eigengewicht- Verformung, deren Größe sich mit der Zeit ändert), des Quellens und des Versprödens besitzen und dadurch eine meßbare, geometrische Veränderung zeigen, so daß sich zwangsläufig für sehr viele Anwendungsfälle nicht akzeptierbare Maßungenauigkeiten ergeben.

Außerdem weisen derartige Kalibrierkörper bei wiederholter, thermischer Belastung die Eigenart auf, daß bei Zurücknahme der Temperaturbeaufschlagung, d.h. bei Wiedererreichen der Ausgangstemperatur, bleibende, geometrische Veränderungen auftreten können. Diese bleibende Änderung infolge von Temperaturwechsel wird als geometrische Hysterese bezeichnet und bedeutet, daß Kalibrierkörper beispielsweise während ihres Gebrauchs keine konstanten Abmessungen aufweisen. Dadurch ist bei Temperaturänderungen während oder zwischen den Kalibriermessungen eine Maßhaltigkeit dieser Kalibrierkörper nicht gegeben. Derartige Kalibrierkörper müssen daher in regelmäßigen Abständen neu vermessen werden (Eigenkalibrierung), um weiterhin als Prüfkörper eingesetzt werden zu können.

Weiterer Stand der Technik, der sich mit Kalibrierkörpern oder maßhaltigen Teilen allgemein befaßt, ist in den Druckschriften DE 44 09 377 A1, JP 6-249767 A (Japio-Abstract), DE 35 03 804 A1, DE 35 03 779 A1, EP 0 660 073 A1, WO91/19953 A1, DD 290 255 A5, DD 290 254 A5 und DD 262 275 A1 zu finden. Ein Verfahren zur Herstellung eines Carbon-Carbon-Komposits, das oxidationsbeständig ist, ist in der EP 0 336 648 A2 beschrieben.

Ausgehend von dem vorstehend beschriebenen Stand der Technik liegt der vorliegenden Erfindung die Aufgabe zugrunde, einen Kalibrierkörper anzugeben, der im Temperaturbereich von - 50°C bis + 75°C praktisch keine durch eine Messung nachweisbare geometrische Hysterese aufweist und somit auf Dauer eine hohe Maßhaltigkeit besitzt; dadurch soll die notwendige Anzahl von Eigenkalibrierungen eines solchen Kalibrierkörpers, im Vergleich zu bekannten Kalibrierkörpern, deutlich reduziert werden.

Gelöst wird diese Aufgabe durch einen Kalibrierkörper, der wenigstens teilweise aus einem Kohlenstofffaser-Verbundwerkstoff besteht, wobei der Verbundkörper aus einem porösen Werkstoff aus einer kohlenstoffhaltigen Matrix, in die Kohlenstofffasern eingebettet sind, aufgebaut ist, der mittels Flüssiginfiltration von Si und im Wesentlichen durch durch dessen Reaktion mit Kohlenstoff gebildetes SiC verdichtet ist, wobei der Gesamtanteil an Si und SiC höchstens 60 Vol.-% beträgt und wobei die Kohlenstofffasern eine Mindestlänge von 3 mm aufweisen.

Bei einem solchen Prüfkörper sind praktisch keine geometrischen Formänderungen in Folge von Temperaturbeaufschlagung zu beobachten. Es kann festgestellt werden, daß sich keine thermisch bedingten Hystereseschleifen im geforderten Temperaturbereich von - 50°C bis + 75°C ergeben und, wenn überhaupt, eine Längenänderung über die Temperatur reversibel ist. Solche Kalibrierkörper lassen sich insbesondere im Service-Bereich der Meßgeräteherstellung einsetzen. Sie erfüllen die Forderung nach einem Wärmeausdehnungskoeffzienten, der der Bedingung -1 x 10⁻⁶ ≤ α ≤ +1 x 10⁻⁶ [1/K] genügt, der eine geringe Wärmekapazität hat, der eine hohe Wärmeleitfähigkeit zeigt, so daß dadurch das Zeitintervall der Klimatisierung bis zum Gebrauch minimiert werden kann. Weiterhin zeichnet sich ein solcher Prüfkörper durch sein geringes, spezifisches Gewicht aus (in der Größenordnung von p = 2,0 g/cm³). Auch zeigt das Material keinen Einfluß aufgrund von Luftfeuchtigkeit. Weiterhin ist keine Bruchanfälligkeit aufgrund von Versprödung zu beobachten. Schließlich besitzen die erfindungsgemäßen Kalibrierkörper eine hohe Steifigkeit, um Verformungen durch Eigengewicht auszuschließen. Die Herstellung kann im Vergleich zu herkömmlichen Kalibrierkörpern, beispielsweise aus Invar, kostengünstig erfolgen.

Durch den vorstehend angegeben Wärmeausdehnungskoeffizienten α tritt bei einer Erwärmung im geforderten Temperaturbereich praktisch keine nachweisbare Längenänderung auf. Daraus ergibt sich, daß beim Abkühlen ebenfalls nahezu keine Änderung eintritt und dadurch auch keine Hysterese auftreten wird.

Der Anteil an freiem Si im Verbundkörper sollte kleiner 10 Vol.-%, bevorzugt kleiner 1 Vol.-%, betragen. Es ist demzufolge darauf zu achten, daß das durch Flüssiginfiltration in den Kohlenstofffaserkörper eingebrachte Si im wesentlichen durch Reaktion mit Kohlenstoff zu SiC umgewandelt wird, so daß ein möglichst geringer Anteil, nach Möglichkeit kleiner 1 Vol.-%, an freiem Si verbleibt. Mit einem sehr geringen Anteil an freiem Si wird die thermische Stabilität gesteigert.

Ein zu hoher Si-Anteil, aber auch ein hoher SiC-Anteil, führt auch zur Abnahme der Bauteilfestigkeit, außerdem zu einer Zunahme der Masse und zu einer Veränderung des Wärmeausdehnungskoeffizienten α hin zu höheren Ausdehnungen.

Es ist vorteilhaft, daß Kalibrierkörper gemäß der Erfindung leicht in eine entsprechende geometrische Form gebracht werden können, indem zunächst ein Verbundkörper in der geometrischen Form des Kalibrierkörpers aus porösem Werkstoff aus einer kohlenstoffhaltigen Matrix hergestellt wird, wobei in die Matrix Kohlenstofffasern eingebettet werden. Anschließend wird flüssiges Silizium infiltriert, das dann mit Kohlenstoff zu SiC reagiert. Es ergibt sich dann ein hoch verdichteter Körper, wobei darauf zu achten ist, daß der gesamte Anteil an Si und SiC höchstens 60 Vol.-% beträgt. Die Kohlenstofffasern sollten eine Mindestlänge von 3 mm aufweisen. Da die thermische Ausdehnung von Kohlenstofffasem im Temperaturbereich von -50°C bis +75°C in deren Längserstreckung betragmäßig negativ ist, können Kohlenstofffasern das betragmäßig positive Ausdehnungsverhalten von Si und SiC kompensieren. Dadurch läßt sich das Ausdehnungsverhalten des Verbundkörpers variieren und zu insgesamt sehr kleinen Werten optimieren. Eine kürzere Faserlänge als 3 mm führt zu einer vermehrten Reaktion der Fasern (größere Oberfläche) mit dem flüssigen Silizium unter Bildung von SiC, so daß sowohl die Sprödbruchanfälligkeit als auch der Wärmeausdehnungskoeffizient im Verbundkörper stark ansteigen. Zusätzlich gilt, daß dann, wenn die Mindestlänge der eingesetzten Fasern unterhalb von 3 mm liegt, ihr Einfluß auf den Wärmeausdehnungskoeffizienten des Verbundkörpers zu gering ist mit der Folge, daß der Wärmeausdehnungskoeffizient des Kalibrierkörpers zu hohe Werte annimmt, die sich nicht mehr im vorgegeben Bereich bewegen.

Weiterhin ist zu bevorzugen, daß im Verbundkörper die Matrixbestandteile eine Korngröße von maximal 100 µm besitzen. Durch diese dimensionsmäßige Beschränkung der Matrixbestandteile ist sichergestellt, daß die Matrixbestandteile weitgehend gleichförmig im Verbundkörper verteilt vorliegen und keine lokalen Verspannungen im Gefüge auftreten können, die zu Hysterese-Effekten oder zu einem Kriechen führen können.

In Bezug auf die offene Porosität des Verbundkörpers ist vorzugsweise zu fordern, daß sie < 5 Vol.-% beträgt. Hieraus ergibt sich, daß eine Feuchtigkeitsaufnahme unterbunden bzw. gering gehalten wird.

Außerdem gewährleistet eine geringe Porosität die hohe Festigkeit des Kalibrierkörpers, insbesondere in Bezug auf mechanische Beanspruchungen, wie sie im Gebrauch auftreten.

Um das Ausdehnungsverhalten des Verbundkörpers einzustellen, können Additive, vorzugsweise in Pulverform, eingebracht und gleichmäßig verteilt sein. Besonders bewährt haben sich Additive in Form von Kohlenstoffpulver oder SiC-Pulver. Additive in Form von Kohlenstoffpulver sollten dann herangezogen werden, wenn niedrigere Faservolumengehalte angestrebt werden. Dadurch lassen sich einerseits noch ausreichende Festigkeiten erzielen, andererseits kann die Begrenzung des Gesamtanteils an Si und SiC auf höchstens 60 Vol.-% erzielt werden. Dagegen sind Additive in Form von SiC-Pulver dann zu bevorzugen, wenn bei niedrigeren Faservolumengehalten die Aufnahme von flüssigem Si so gering wie möglich gehalten werden soll, um eine Reaktion mit den Fasern zu vermeiden und um somit einem Sprödbruchverhalten vorzubeugen.

Der Verbundkörper wird in einer bevorzugten Ausführung aus Kohlenstofffasern in Form von Matten aufgebaut. Durch die Matten können die Struktur und die Festigkeit des Verbundkörpers und damit des Kalibrierkörpers definiert eingestellt werden. Bewährt haben sich Matten in gewebter und/oder gewirkter Form, wobei zu bevorzugen ist, daß sich die Matten in der x-, y-Richtung erstrecken, und in der z-Richtung übereinandergestapelt sind, unter der Maßgabe, daß die x-, y- und z-Richtungen ein rechtwinkliges Koordinatensystem bilden. Weiterhin sollten die Matten in ihrer Struktur und Anordnung in z-Richtung symmetrisch zu einer Mittenebene angeordnet werden; darüberhinaus ist eine Mattenanordnung mit einem orthotropen Aufbau zu bevorzugen, da damit in einfacher und somit wirtschaftlicher Weise Verbundkörper ohne Verschnitt an kostenintensiven Kohlenstofffasern hergestellt werden können.

Mit einem quasi-isotropen Aufbau, d.h. in z-Richtung wechselnden Lagen, die in x-y-Ebenen Richtungen um 45° verdreht sind, kann weiterhin erreicht werden, daß sich das anisotrope Werkstoffverhalten einem isotropen Verhalten annähern kann, so daß die Richtungsabhängigkeit in Bezug auf Festigkeit und Wärmeausdehnungskoeffizient, insbesondere bei plattenförmigen Kalibrierkörpem, deutlich reduziert werden kann. Gerade in Faser- bzw. Gewebeebenen kann ein sehr niedriges α erzielt werden.

Im Hinblick auf die geforderten Eigenschaften des Kalibrierkörpers sollten generell im Verbundkörper die Fasern zweidimensional ausgerichtet sein.

Es hat sich gezeigt, daß der Verbundkörper bzw. der Kalibrierkörper vor seinem Einsatz durch thermische Auslagerung in seinen inneren Spannungen minimiert werden kann. Eine solche thermische Auslagerung sollte in einem Temperaturbereich zwischen +100°C und -100°C erfolgen mit einer Zyklenzahl zwischen 1 und 5, d.h. der Kalibrierkörper wird zunächst erhitzt, dann anschließend abgekühlt (entspricht einem Zyklus), so daß er dann eine Langzeitstabilität und eine sehr geringe geometrische Hysterese zeigt.

Ein für die wesentlichen Anwendungen optimierter Kalibrierkörper besitzt einen Verbundkörper mit einem Kohlenstoffgehalt von 76 Vol.-%, einem SiC-Gehalt im Bereich von 17 Vol.-%, einem Gehalt an freiem Si von etwa 5 Vol.-% und einer offenen Porosität von etwa 2 Vol.-%. Mit einem solchen Kalibrierkörper werden folgende physikalischen Werte erreicht, Ausführungsbeispiel 1:
Dichte ρ: 2,0 g/cm³
Wärmeausdehnungskoeffizient α (im Temperaturbereich -50°C < T < +50°C gemessen):
   -0,1 · 10⁻⁶ · K⁻¹ < α < 0,2 · 10⁻⁶ · K⁻¹
Offene Porosität: 2 Vol.-%
Biegefestigkeit: 132 MPa

Eine bevorzugte Verwendung solcher Kalibrierkörper liegt im Bereich von Koordinatenmessmaschinen; sie sind darüberhinaus als Lineale, als Winkelmesser, als Eichmaße, Längenmaße oder als Endmaße verwendbar. Solche Kalibrierkörper sind in den Figuren der beigefügten Zeichnungen dargestellt. In den Zeichnungen:
- Figur 1: zeigt eine schematisch dargestellte Kalibrierplatte, die aus einzelnen Kohlenstofffasermatten in gewebter oder gewirkter Form aufgebaut ist, mit vier Messstellen in den Eckbereichen in Form von in y-Richtung verlaufenden Bohrungen;

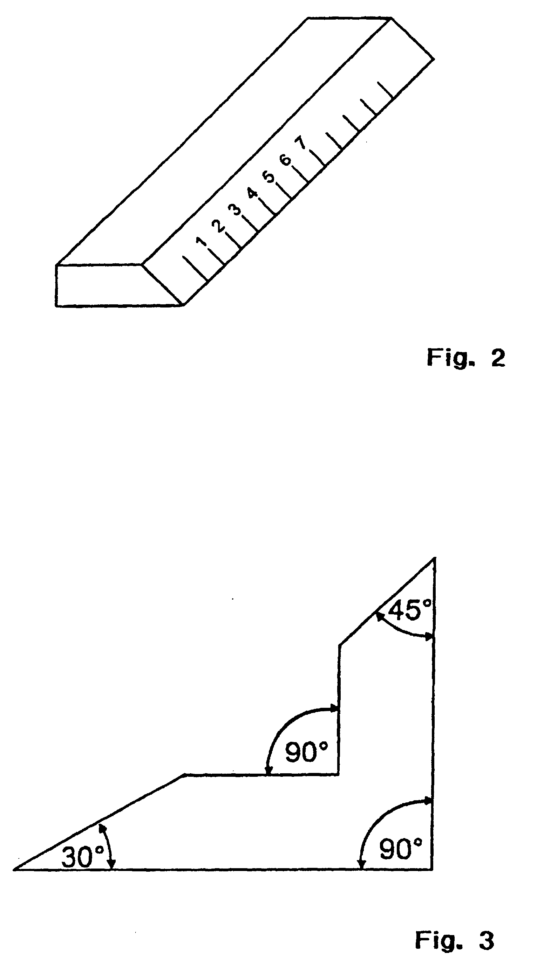

- Figur 2: zeigt einen Kalibrierkörper in Form eines Lineals mit abgeschrägter Seitenkante,
- Figur 3: zeigt einen Kalibrierkörper in Form eines Winkelmaßes mit zwei Schenkeln, die unter 90° zueinander verlaufen und an ihren Enden mit einer unter 30° bzw. 45° verlaufenden Kante versehen sind,

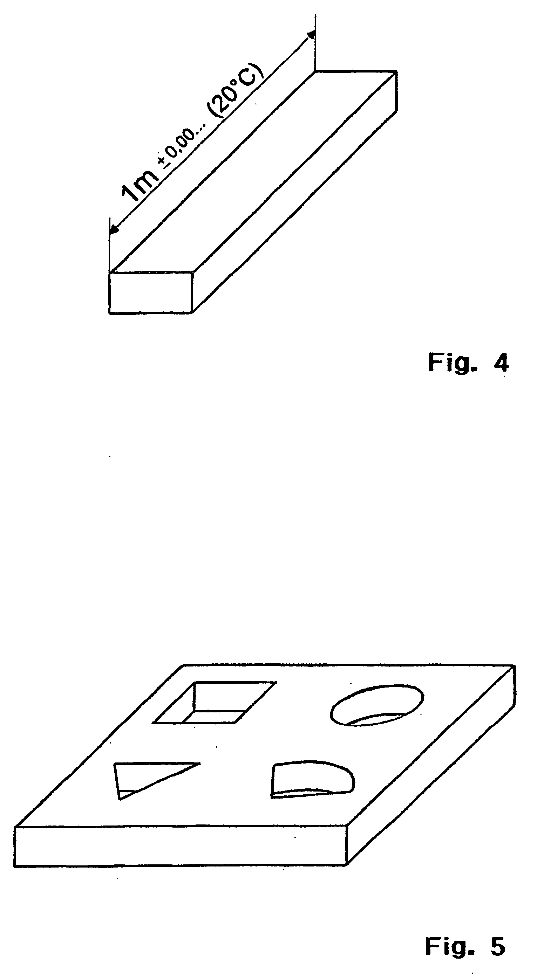

- Figur 4: zeigt einen Kalibrierkörper in Form eines Endmaßes mit einer Länge von 1 m,
- Figur 5: zeigt ein Eichmaß bzw. eine Lehre mit vier Bohrungen unterschiedlicher Geometrie,

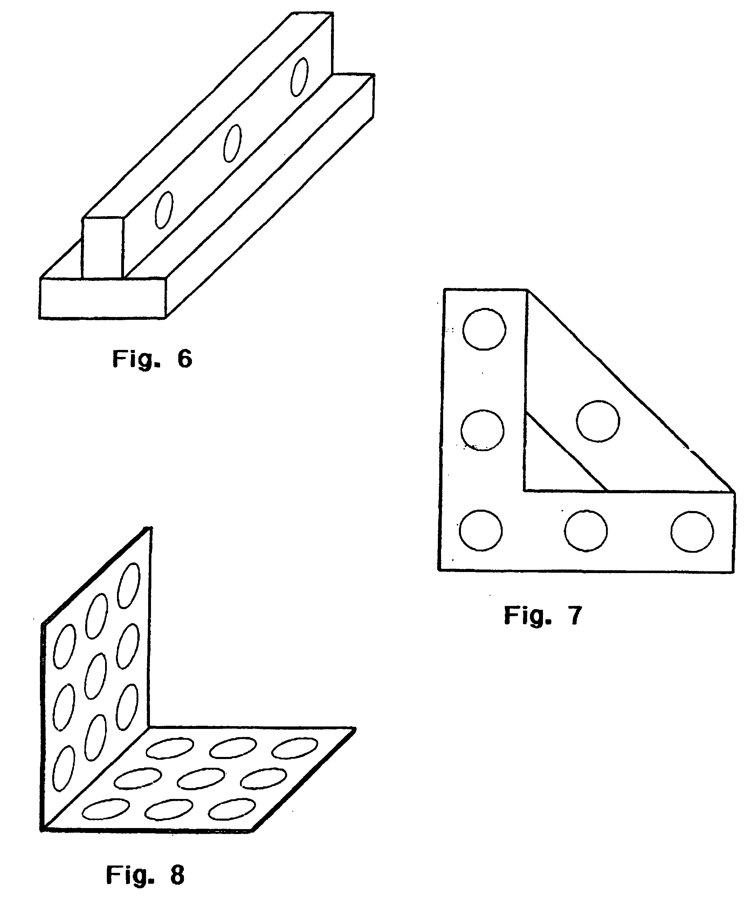

- Figur 6: zeigt ein eindimensionales Koordinatenmaß, das aus zwei platten- bzw. stabförmigen Kalibrierkörperteilen zusammengesetzt ist, so daß sich ein T-förmiger Querschnitt ergibt, mit drei Bohrungen in dem senkrecht stehenden Steg,
- Figur 7: zeigt ein zweidimensionales Koordinatenmaß, das aus einem Winkel und einer die Enden des Winkels verbindenden Querstrebe aufgebaut ist, wobei sowohl in dem Winkel als auch in der Querstrebe Bohrungen ausgeführt sind, und
- Figur 8: zeigt ein dreidimensionales Koordinatenmaß, das aus zwei unter einem Winkel von 90° zueinander verlaufenden dünnen Plattenteilen aufgebaut ist, wobei jedes Plattenteil ein Feld von 3 x 3 Bohrungen aufweist.

Bei den Kalibrierkörpern handelt es sich in der Regel um einfache zwei- oder dreidimensionale Geometrien, wie sie in den Figuren dargestellt sind, die exponierte Meßstellen (Flächen, Kanten, Ecken, Bohrungen) aufweisen. Diese Meßstellen verfügen über Oberflächen mit hoher Oberflächengüte (geschliffen, poliert), um die Reproduzierbarkeit der Messung zu gewährleisten. Zu diesem Zweck können auch geometrisch präzise Formteile aus z.B. monolithischer Keramik oder Metall in die Kalibrierkörper, z.B. durch Kleben, eingebracht oder aufgebracht werden.

Für die Gestalt und die Auslegung solcher Kalibrierkörper kann auf die einschlägigen DIN-Normen zurückgegriffen werden. Um eine Optimierung zwischen der Forderung nach einer möglichst langen Kalibrierstrecke, die ohne Verschieben eines Kalibrierkörpers vermessen werden kann, und der Forderung nach einer geringen Masse vorzunehmen, werden die erfindungsgemäßen Kalibrierkörper mit Abmessungen von maximal 1200 mm ausgeführt.

Um komplexere Kalibrierkörper aufzubauen, können einzelne Kalibrierkörperteile vorgefertigt und durch Fügen in situ zusammengesetzt werden.

Kalibrierkörper werden üblicherweise vor ihrem Einsatz aufwendig bei einer bestimmten Temperatur, z.B. 20°C, vermessen und geeicht. Nach einer Temperaturbelastung in dem erwähnten Temperaturbereich und einer anschließenden Zurückführung auf Eichtemperatur muß sich dann exakt und zeitgleich der Abstand zwischen vorher festgelegten Punkten zurückbilden; dies entspricht der Forderung, daß nach beliebig vielen Belastungszyklen der Startpunkt gleich dem Endpunkt entspricht und damit keine Hystereseschleife vorhanden ist.

Weitere Gründe für auftretende Hysteresen bei Kalibrierkörper nach dem Stand der Technik sind die Umwandlung von Kristallstrukturen, weitere Reaktionen von chemischen Elementen der Werkstoffe und Setzbewegungen im Gefüge der Werkstoffe. Bei dem erfindungsgemäßen Kalibrierkörper aus kohlenstofffaserverstärktem Verbundwerkstoff, der mit flüssigem Silizium durchsetzt wird, das überwiegend mit Kohlenstoff zu SiC reagiert, sind diese kritischen Punkte nicht gegeben. Einem möglichen Setzen des Werkstoffs kann dadurch Rechnung getragen werden, daß, wie bereits vorstehend erwähnt ist, vor Einsatz als Kalibrierkörper eine Auslagerung stattfindet. Hierzu wurden in Versuchen Kalibrierkörper bis zu fünfmal in einem Ofen auf 100°C aufgeheizt, jeweils 2 Stunden bei dieser Temperatur gehalten und anschließend in einer Kältekammer auf mindestens -60°C abgekühlt, mit einer Haltezeit von wiederum 2 Stunden.

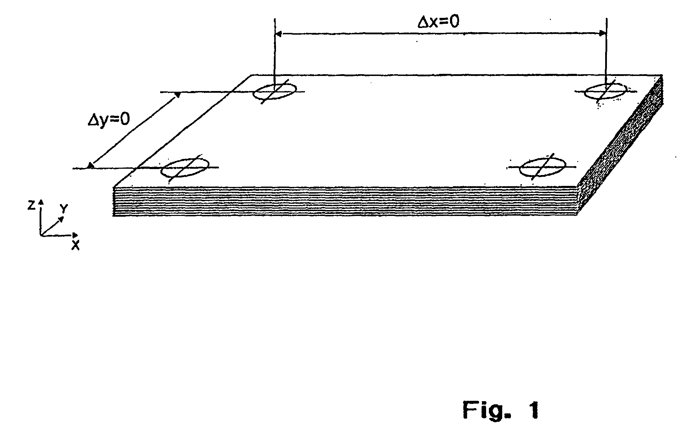

Zu Versuchszwecken wurden Kalibrierkörper hergestellt. Hierbei handelt es sich um Kalibrierplatten, entsprechend einer solchem, die in Figur 1 schematisch dargestellt ist, mit einzelnen Kohlenstofffaser-Matten in gewebter oder gewirkter Form, die sich in x-y-Richtung erstrecken. Die einzelnen Matten sind in z-Richtung in der erforderlichen Anzahl übereinandergestapelt, um die geforderte Dicke der Kalibrierplatte zu erzielen. Weiterhin wurden in der Kalibrierplatte sich in z-Richtung erstreckende Bohrungen eingebracht. In diese Bohrungen wurden hochpräzise geschliffene Meßhülsen aus Metall eingebracht, um glatte und verschleißarme Bezugsoberflächen für die Bestimmung der Meßpunkte (Mittelpunkte der Meßhülsen) zu erzielen.

Ein Kalibrierkörper, wie er beispielhaft in der Figur 1 gezeigt ist, wird wie folgt hergestellt (Ausführungsbeispiel 2).

Ausgangsmaterialien waren:
- Fasern: HTA, Tenax; Hersteller AKZO;
- Gewebe: ST462 (d.h.: Webart: Köper 2/2, Flächengewicht 245 g/m², Filamentanzahl 3000)

Von dem Gewebe wurden 28 Lagen in z-Richtung übereinander gestapelt mit einer Orientierung der Faserrichtungen innerhalb der Lagen von 0°/90°.

Der so aufgebaute Kohlenstofffaserverbundkörper wurde in einem Autoklaven bei einer Maximaltemperatur Tₘₐₓ = 210°C und einem maximalen Druck Pₘₐₓ = 8 bar (8 x 10⁵ Pa) für eine Dauer von 90 min behandelt.

Der durch diesen Autoklavprozess hergestellte CFK-Grünkörper besaß eine Masse von 2787 g, ein Volumen von 1875 cm³ und einen Faservolumengehalt von ca. 52% .

Dieser CFK-Körper wurde in einem anschließenden Pyrolyseschritt bei Tₘₐₓ = 1650°C und Pₘₐₓ = 1,1 bar (1,1 x 10⁵ Pa) zu einem C/C-Vorkörper verkokt, d.h. der Matrix-Kunststoff des CFK wurde unter Abgabe der flüchtigen Bestandteile in Kohlenstoff umgewandelt. Durch die Abgabe der flüchtigen Bestandteile trat ein Volumenschrumpf vornehmlich in Dickenrichtung auf, da in Faserrichtung die Fasern stützend in Bezug auf die Geometrie wirken. Durch den Schrumpf ergab sich ein Volumen von 1641,7 cm³. Daraus errechnet sich ein Faservolumengehalt von 57,5% bei einer Masse von 2236 g.

Der C/C-Vorkörper wurde in einem dritten Prozessschritt bei Tₘₐₓ = 1650 °C und P = 10⁻³ bar (10² Pa) mit flüssigem Silizium infiltriert. Dies führte zu einer Massenzunahme auf 3015 g bei einem Volumen von 1674 cm³ und einem Faservolumengehalt von ca. 58,5%.

Parameter/Werte der einzelnen Stufen ergeben sich auch aus der nachfolgenden Tabelle:

| | CFK | C/C | C/C-SiC |
|---|---|---|---|
| Faservolumengehalt | ≈ 52% | 57.5% (evaluiert auf Basis CFK) | 58,5 % (evaluiert auf Basis CFK) |
| Tₘₐₓ | 210°C | 1650°C | 1650°C |
| Pₘₐₓ | 8 bar | 1,1 bar | 10⁻³ bar |
| Masse | 2787 g | 2236 g | 3015 g |
| Volumen | 500 x 500 x 7,5 mm³ | 499 x 499 x 6,7 mm³ | 498 x 498 x 6,75 mm³ |

Nach dem Archimedes-Verfahren ergaben sich eine experimentelle Dichte im C/C-SiC von 1,8g/cm³ und eine experimentelle, offene Porosität im C/C-SiC von 3,3 Volumen-%.

Mit einem so hergestellten Kalibrierkörper wurden erste Messungen durchgeführt, die folgende Meßdaten ergeben haben:
Wärmeausdehnungskoeffizient
-0,4 10⁻⁶ · K⁻¹ < α <- 0,1 · 10⁻⁶ · K⁻¹ bei -60°C < T < 100°

Bei 8 Messungen nach jeweils einer thermischen Zyklierung im Ofen bzw. in der Kältekammer (vor jeder Messung wurde aufgeheizt (100°C), abgekühlt (-60°C) und einen Temperaturausgleich auf ca. 20°C abgewartet) zeigten sich als Ergebnis keine Hysterese und keine meßbar verbleibenden, geometrischen Veränderungen, d.h. zwei vorher bestimmte Punkte bilden sich nach einer thermischen Zyklierung und Zurückführung auf Ausgangstemperatur wieder an den gleichen geometrischen Orten ab, wie vor der thermischen Zyklierung. Dabei betrug die Meßunsicherheit des eingesetzten Meßgeräts von der Firma Zeiss 1,5 um + 3 µm/m im Raum (d.h. auf dem ersten gemessenen Meter ist im Raum eine maximale Ungenauigkeit von 1,5 um vorhanden; bei jedem folgenden Meter addieren sich 3 µm zu den 1,5 µm hinzu).

Aus diesen Meßdaten wird ersichtlich, daß die geforderten und neuen Ansprüche in Bezug auf Hysterese Materialalterung, Gewicht, Handhabbarkeit, physikalische Eigenschaften und Preis erfüllt und übertroffen werden konnten.

## Patentansprüche

1. Kalibrierkörper, der wenigstens teilweise aus einem Kohlenstofffaser-Verbundkörper besteht, wobei der Verbundkörper aus einem porösen Werkstoff aus einer kohlenstoffhaltigen Matrix, in die Kohlenstofffasern eingebettet sind, aufgebaut ist, der mittels Flüssiginfiltration von Si und im Wesentlichen durch dessen Reaktion mit Kohlenstoff gebildetes SiC verdichtet ist, wobei der Gesamtanteil an Si und SiC höchstens 60 Vol.-% beträgt und wobei die Kohlenstofffasern eine Mindestlänge von 3 mm aufweisen.

2. Kalibrierkörper nach Anspruch 1, **dadurch gekennzeichnet, dass** im Verbundkörper der Anteil an freiem Si < 10 Vol.-% beträgt.

3. Kalibrierkörper nach Anspruch 2, **dadurch gekennzeichnet, dass** im Verbundkörper der Anteil an freiem Si < 1 Vol.-% beträgt.

4. Kalibrierkörper nach Anspruch 1, **dadurch gekennzeichnet, dass** im Verbundkörper die Matrixbestandteile eine Korngröße von maximal 100 µm besitzen.

5. Kalibrierkörper nach Anspruch 1, **dadurch gekennzeichnet, dass** die offene Porosität des Verbundkörpers < 5 Vol.-% beträgt.

6. Kalibrierkörper nach Anspruch 1, **dadurch gekennzeichnet, dass** der Verbundkörper das Ausdehnungsverhalten beeinflussende Additive gleichmäßig verteilt enthält.

7. Kalibrierkörper nach Anspruch 6, **dadurch gekennzeichnet, dass** die Additive in Pulverform vorliegen.

8. Kalibrierkörper nach Anspruch 7, **dadurch gekennzeichnet, dass** die Additive Kohlenstoffpulver sind.

9. Kalibrierkörper nach Anspruch 7, **dadurch gekennzeichnet, dass** die Additive SiC-Pulver sind.

10. Kalibrierkörper nach Anspruch 1, **dadurch gekennzeichnet, dass** im Verbundkörper die Kohlenstofffasern in Form von Matten vorliegen.

11. Kalibrierkörper nach Anspruch 10, **dadurch gekennzeichnet, dass** die Matten in gewebter und/oder gewirkter Form vorliegen.

12. Kalibrierkörper nach Anspruch 10, **dadurch gekennzeichnet, dass** sich die Matten in x-y-Ebenenrichtung erstrecken und in z-Richtung übereinandergestapelt sind, wobei die x-, y- und z-Richtungen ein rechtwinkliges Koordinatensystem bilden.

13. Kalibrierkörper nach Anspruch 12, **dadurch gekennzeichnet, dass** die Matten in ihrer Struktur und Anordnung in z-Richtung symmetrisch zu einer Mittenebene angeordnet sind.

14. Kalibrierkörper nach Anspruch 13, **dadurch gekennzeichnet, dass** die Mattenanordnung einen orthotropen Aufbau aufweist.

15. Kalibrierkörper nach Anspruch 12, **dadurch gekennzeichnet, dass** die Matten in einem quasi-isotropen Aufbau so angeordnet sind, dass in z-Richtung die Lagen wechselnd in der x-y-Ebenen-Richtung um 45° mit ihren Faserorientierungen zu den jeweils benachbarten Lagen gedreht sind.

16. Kalibrierkörper nach Anspruch 1, **dadurch gekennzeichnet, dass** im Verbundkörper die Fasern zweidimensional ausgerichtet sind.

17. Kalibrierkörper nach Anspruch 1, **dadurch gekennzeichnet, dass** der Verbundkörper durch thermische Auslagerung in seinen inneren Spannungen, frei von Hysterese-Effekten, minimiert ist.

18. Kalibrierkörper nach Anspruch 1, **dadurch gekennzeichnet, dass** der Verbundkörper einen Kohlenstoffgehalt von 76 Vol.-%, einen Gehalt an SiC von etwa 17 Vol.-%, einen Gehalt an freiem Si etwa von 5 Vol.-% und eine offene Porosität von etwa 2 Vol.-% aufweist.

19. Verwendung des Kalibrierkörpers nach einem der Ansprüche 1 bis 18 als Lehre, als Endmaß, als Eichmaß, als Längenmaß, als Lineal, als Winkelmesser oder als Koordinatenmaß.

## Claims

1. A calibrating body, which consists at lest in part of a carbon fiber composite body, wherein the composite body is formed from a porous material from a carbon-containing matrix, into which carbon fibers are embedded, which is compacted by fluid infiltration of Si, which is essentially converted by reaction with carbon to SiC, wherein the overall portion of Si and SiC is a maximum of 60% by volume, and wherein the carbon fibers have a minimum length of 3 mm.

2. Calibrating body according to claim 1, **characterized in that** the composite body the portion of free Si is < 10% by volume.

3. Calibrating body according to claim 2, **characterized in that** in the composite body the portion of free Si is < 1% by volume.

4. Calibrating body according to claim 1, **characterized in that** in the composite body the matrix components have a maximum grain size of 100 µm.

5. Calibrating body according to claim 1, **characterized in that** the open porosity of the composite body is < 5% by volume.

6. Calibrating body according to claim 1, **characterized in that** the composite body contains evenly distributed additives for adjusting the elongation behavior.

7. Calibrating body according to claim 6, **characterized in that** the additives are in powder form.

8. Calibrating body according to claim 7, **characterized in that** the additives are carbon powder.

9. Calibrating body according to claim 7, **characterized in that** the additives are SiC powder.

10. Calibrating body according to claim 1, **characterized in that** in the composite body the carbon fibers are in the form of mats.

11. Calibrating body according to claim 10, **characterized in that** the mats are in a form selected from the group consisting of woven and knitted.

12. Calibrating body according to claim 10, **characterized in that** the mats extend in the x-y plane directions, and are stacked on top of one another in the z-direction, with the x-, y- and z-directions forming a rectangular coordinate system.

13. Calibrating body according to claim 12, **characterized in that** the mats in their structure and layout in the z-direction are placed symmetric to a central plane.

14. Calibrating body according to claim 13, **characterized in that** the mat placement exhibits an orthotropic structure.

15. Calibrating body according to claim 12, **characterized in that** the mats are arranged in a quasi-isotropic structure so that the layers are alternating the fibre orientation in z-direction in respect to the x-y plane direction by 45° to the respective adjacent layer.

16. Calibrating body according to claim 1, **characterized in that** in the composite body the fibers are arrayed two-dimensionally.

17. Calibrating body according to claim 1, **characterized in that** the composite body has its internal stresses minimized through thermal aging, to be free from hysteresis effects.

18. Calibrating body according to claim 1, **characterized in that** the composite body exhibits a carbon content of 76% by volume, an SiC content of about 17% by volume, a free Si content of about 5% by volume, and an open porosity of about 2% by volume.

19. Use of the calibrating body according to one of claims 1 to 18 as a gauge, an end gauge, a standard gauge measure, a standard of length, a linear measurement device, an angle measuring device or a coordinate measuring device.

## Revendications

1. Corps de calibrage qui se compose au moins partiellement d'un corps composite en fibre de carbone, le corps composite étant assemblé à partir d'un matériau poreux en matrice de carbone, dans laquelle sont enrobées des fibres de carbone, corps qui est densifié au moyen de l'infiltration fluide de Si et sensiblement de SiC formé par sa réaction avec le carbone, la part totale de Si et Sic s'élevant à maximum 60 % en volume et les fibres de carbone présentant au moins une longueur minimale de 3 mm.

2. Corps de calibrage selon la revendication 1, **caractérisé en ce que** la part de Si libre s'élève à < 10 % en volume dans le corps composite.

3. Corps de calibrage selon la revendication 2, **caractérisé en ce que** la part de Si libre s'élève à < 1 % en volume dans le corps composite.

4. Corps de calibrage selon la revendication 1, **caractérisé en ce que** les composants de matrice dans le corps composite possèdent une grosseur de grain maximale de 100 µm.

5. Corps de calibrage selon la revendication 1, **caractérisé en ce que** la porosité ouverte du corps composte s'élève à < 5 % en volume.

6. Corps de calibrage selon la revendication 1, **caractérisé en ce que** le corps de calibrage contient des additifs répartis de manière homogène qui influence le comportement de dilation et.

7. Corps de calibrage selon la revendication 6, **caractérisé en ce que** les additifs se présentent sous forme pulvérulente.

8. Cors de calibrage selon la revendication 7, **caractérisé en ce que** les additifs sont de la poudre de carbone.

9. Corps de calibrage selon la revendication 7, **caractérisé en ce que** les additifs sont de la poudre SiC.

10. Corps de calibrage selon la revendication 1, **caractérisé en ce que** les fibres se présentent sous la forme de treillis dans le corps composite.

11. Corps de calibrage selon la revendication 10, **caractérisé en ce que** les treillis sont sous formes tissées ou tricotées.

12. Corps de calibrage selon la revendication 10, **caractérisé en ce que** les treillis s'étendent dans la direction de plan x-y et sont superposés dans le sens z, les directions x, y et z formant un système de coordonnées rectangulaires.

13. Corps de calibrage selon la revendication 12, **caractérisé en ce que** les treillis sont disposés dans leurs structure et leur agencement dans le sens z de manière symétrique à un plan médian.

14. Corps de calibrage selon la revendication 12, **caractérisé en ce que** la disposition de treillis présente une structure orthotrope.

15. Corps de calibrage selon la revendication 12, **caractérisé en ce que** les treillis sont disposés dans une structure quasi-isotrope de sorte que dans le sens z les couches sont tournées en alternance dans le sens des plans x-y de 45 ° avec l'orientation des fibres en direction des couches voisines respectives.

16. Corps de calibrage selon la revendication 1, **caractérisé en ce que** dans le corps composite, les fibres sont orientées de manière bidimensionnelle.

17. Corps de calibrage selon la revendication 1, **caractérisé en ce que** le corps composite est minimisé par déport thermique dans ses tensions internes et est exempt d'effets d'hystérésis.

18. Corps de calibrage selon la revendication 1, **caractérisé en ce que** le corps composite présente une teneur en carbone de 76 % en volume, une teneur en SiC d'environ 17 % en volume, une teneur en Si libre d'environ 5 % en volume et une porosité ouverte d'environ 2 % en volume.

19. Utilisation du corps de calibrage selon l'une des revendications 1 à 18 en tant que calibre, cale étalon, jauge, mesure de longueur, rapporteur ou mesure de coordonnées.
